# EUROPÄISCHE PATENTANMELDUNG

(11) **EP 0 966 927 A2**
(43) Veröffentlichungstag der Anmeldung: **29.12.1999**
(21) Anmeldenummer: 99112106.2
(22) Anmeldetag: 23.06.1999
(51) Int. Cl.: A61C 13/00

(54) **Verfahren und Vorrichtung zur Herstellung von medizinischen Teilen, insbesondere von Zahnersatz**

(30) Priorität: 24.06.1998 DE 19828003
(71) Anmelder: Ellerbrock, Christof, 55218 Ingelheim (DE)
(72) Erfinder: Ellerbrock, Christof, 55218 Ingelheim (DE)
(74) Vertreter: Walz, Erich, Dipl.-Ing.

(57) **Zusammenfassung**

Die Erfindung betrifft ein Verfahren und eine Vorrichtung zur Herstellung von medizinischen Teilen, insbesondere von Zahnersatz. Die Vorrichtung besteht aus einer Vermessungsvorrichtung zur Erfassung der Dimensionen, z.B. Zahngröße, Form etc., aus einem Rechner, der die von der Vermessungsvorrichtung erfaßten Daten auswertet, und aus einer sogenannten Rapid Prototyping Machine, die aus den vom Rechner generierten Daten ein medizinisches Teil, beispielsweise eine Zahnkrone erzeugt. Hierdurch entfällt eine umständliche und für den Patienten lästige mechanische Abnahme eines Abdrucks für eine Negativform.

## Beschreibung

Die Erfindung betrifft ein Verfahren und eine Vorrichtung zur Herstellung von medizinischen Teilen als Ersatz für Körperteile, insbesondere von Zahnersatz.

Ein derartiges Verfahren bzw. eine derartige Vorrichtung kommt beispielsweise als sogenanntes CAD/CAM-System (CAD = Computer Aided Design, CAM = Computer Aided Manufacturing) in der Zahnmedizin bzw. der Zahntechnik zum Einsatz. Auf dem Markt sind Geräte erhältlich, die eine Herstellung sogenannter Halbzeuge ermöglichen. So können beispielsweise Inlays und Teilkronen hergestellt werden. Die Zahnoberfläche, die sogenannte Okklusion ist dabei in der Regel lediglich angedeutet und muß vom Zahnarzt eingeschliffen werden. Häufig kann mit bekannten Vorrichtungen auch lediglich ein Material beispielsweise Keramik be- und verarbeitet werden. Eine andere bekannte Möglichkeit besteht darin, aus Titanblöcken ein Kronen- oder Brückengerüst zu fräsen, welches vom Zahntechniker anschließend aufwendig mit Keramik verblendet wird. In der Praxis von Zahnärzten und Zahntechnikern sind neben diesen Techniken noch sehr weit verbreitet zahntechnische Arbeiten in 100 %-iger Handarbeit, bei der zunächst beim Patienten Abdrücke abgenommen werden. Beim Zahntechniker werden die vom Zahnarzt angelieferten Abdrücke mit Gips ausgegossen und die Kiefermodelle von Ober- und Unterkiefer in Relation zueinander gebracht. Im nächsten Schritt werden die Gipsmodelle soweit erforderlich mit Wachs modelliert, anschließend abgenommen und mit Einbettmasse zum Gießen eingebettet. Als nächstes wird die in Metall gegossene Arbeit ausgearbeitet und soweit erforderlich mit Kunststoff oder Keramik verblendet.

Der Erfindung liegt die Aufgabe zugrunde, ein Verfahren und eine Vorrichtung zur Herstellung von medizinischen Teilen anzugeben, die es ermöglicht, die medizinischen Teile weitestgehend maschinell mit geringsten Toleranzen und falls erforderlich auch beliebig reproduzierbar zu fertigen.

Diese Aufgabe wird durch eine Vorrichtung zur Herstellung von medizinischen Teilen als Ersatz für Körperteile, insbesondere von Zahnersatz gelöst, mit einer Sensorvorrichtung zur Erfassung der Dimensionen eines herzustellenden medizinischen Teils, mit einer Datenverarbeitungsvorrichtung zur Auswertung der mittels der Sensorvorrichtung erfaßten Daten, und mit einer Herstellungsvorrichtung zur Herstellung des medizinischen Teils aus den mittels der Datenverarbeitungsvorrichtung ausgewerteten Daten.

Das Verfahren und die ein derartiges Verfahren anwendende Herstellungsvorrichtung vereint die aus anderen technischen Gebieten bekannten Vorteile eines computergestützten Designs für medizinische Anwendungen. Grundlage dieses computergestützten Designs ist dabei die Datenverarbeitungsvorrichtung, die die durch die Sensorvorrichtung ermittelten Meßdaten und Dimensionen des herzustellenden medizinischen Teils als Eckdaten für ein zunächst mit Hilfe der Datenverarbeitungsvorrichtung generiertes virtuelles 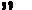 Ersatzteil". Das so erzeugte Modell oder Abbild des auch in Realität herzustellenden medizinischen Teils kann soweit erforderlich beispielsweise anhand weiterer Eckdaten wie Festigkeitsvoraussetzungen, Farbwünsche etc. weiter optimiert werden. Die Daten des auf diese Weise entstandenen Abbilds des zu erzeugenden 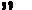 Originalteils" werden mit Hilfe der Datenverarbeitungsvorrichtung an die Herstellungsvorrichtung (Rapid Prototyping Machine) weitergeleitet, die hieraus unter Verarbeitung beispielsweise von pulverförmigem Material, Metall und/oder Keramik das medizinische Teil fertigt. Die Vorteile der auf dem Rapid Prototyping basierenden Lösung liegen vor allem in dem sehr breiten Einsatzspektrum dieses Verfahrens. Neben der Herstellung von einzelnen Zähnen, Inlays und Kronen, Zahnbereichen mit Brücken etc. ist es auch möglich, ganze Kiefer mit unterschiedlichsten Arbeiten, z.B. kombinierten Kronen-Brücken-Modellguß Konstruktionen, reine Modellgußarbeiten, oder implantatgetragene Suprakonstruktionen, etc. herzustellen. Ein weiterer Vorteil ist die Variationsbreite der zum Einsatz geeigneten Materialien Es lassen sich weitgehend alle Materialien einsetzen, die in Pulverform vorliegen, sowohl Metalle, als auch Keramiken. So ist es mit ein und derselben Herstellungsvorrichtung möglich, ein Metallgerüst zu erstellen und dieses, nach dem Austausch des Sinterstoffs zu verblenden. Auch individuelle Verbindungselemente, wie Geschiebe, mit denen festsitzender und herausnehmbarer Zahnersatz kombiniert werden kann, sind leicht (nach dem Baukastenprinzip) herstell- und integrierbar.

Als vorteilhafte Möglichkeiten zur Datenerfassung für eine Sensorvorrichtung hat es sich erwiesen, daß die Sensorvorrichtung eine Kamera, eine Röntgenvorrichtung, eine Ultraschallaufnahmevorrichtung, eine Computertomograhphieaufnahmevorrichtung und/oder eine mechanische Vermessungsvorrichtung aufweist, die zur optischen Vermessung der Dimensionen des zu ersetzenden Körperteils vorgesehen ist.

Ein vorteilhafter Anwendungsfall, der auch für den Patienten bisher erforderliche lästige Prozeduren wie Abdruckerstellung etc. überflüssig macht ist dadurch gegeben, daß die Vorrichtung zur Herstellung von Zahnersatz vorgesehen ist.

Die Datenerfassung durch die Sensorvorrichtung kann dadurch wesentlich vereinfacht und verbessert werden, daß die Datenverarbeitungsvorrichtung eine Symbolbibliothek von medizinischen Teilen enthält, die aus den durch die Sensorvorrichtung erfaßten Daten 3-D-Modelle vorgebbarer Körperteile generiert. Bei zahnmedizinischen Anwendungen steht als Symbolbibliothek beispielsweise eine Auswahl der verschiedenen Zahntypen, wie Eckzahn, Schneidezahn etc. zur Verfügung. Nach Auswahl des gewünschten Zahntyps werden mittels der Sensorvorrichtung die für die jeweilige Zahnform charakteristischen Dimensionen ermittelt und als Eckdaten für den als 3D-Modell virtuell zu generierenden Zahn verwendet. Neben der Ermittlung der Dimensionen können mittels der Datenverarbeitungsvorrichtung auch weitere Charakteristika wie beispielsweise Zahnfarbe, Festigkeit ermittelt und/oder vorgegeben werden.

Insbesondere für Anwendungen im zahnmedizinischen Bereich hat es sich als vorteilhaft erwiesen, daß die Vorrichtung Mittel aufweist, die die über die Sensorvorrichtung erfaßten Daten der Kiefer in Relation zu dem herzustellenden Teil setzt, wobei eine Mittelwertartikulation und/oder eine individuelle Artikulation vorgesehen ist. Dabei werden anhand einer sogenannten Funktionsdiagnostik beispielsweise die Kieferbewegungen nach vorgegebenen Variablen klassifiziert oder individuell ermittelt. So kann beispielsweise der Gleitbahnwinkel der Ober- und Unterkiefer an die individuellen Gegebenheiten über die Sensorvorrichtung(en) erfaßt und/oder durch Vorgabe von Standardwerten angepaßt werden.

Insbesondere bei der Erstellung komplexerere Zahnstrukturen ist es zur Vermeidung späterer Reklamationen und ggf. erforderlicher Nachbesserungen etc. sehr hilfreich, daß die Vorrichtung Mittel zur Simulation von Körperbewegungen anhand der aus den 3-D-Modellen erstellten virtuellen Körperteile aufweist. So werden bei zahnmedizinischen Anwendungen Ober- und Unterkiefer in Relation zueinander gesetzt, um die daraus resultierenden Auswirkungen von Kieferbewegungen zu simulieren.

Im folgenden wird die Erfindung anhand der in den Figuren dargestellten Ausführungsbeispiele näher beschrieben und erläutert.
Es zeigen:
- Fig. 1: ein erstes Ausführungsbeispiel einer Vorrichtung zur Herstellung von medizinischen Teilen mit räumlich getrennter Sensorvorrichtung und Herstellungsvorrichtung,
- Fig. 2: ein zweites Ausführungsbeispiel einer Vorrichtung zur Herstellung von medizinischen Teilen mit gemeinsamer Datenverarbeitungsvorrichtung der Sensorvorrichtung und der Herstellungsvorrichtung und
- Fig. 3: einen Bildschirmausschnitt mit einer Symbolbibliothek für medizinische Teile.

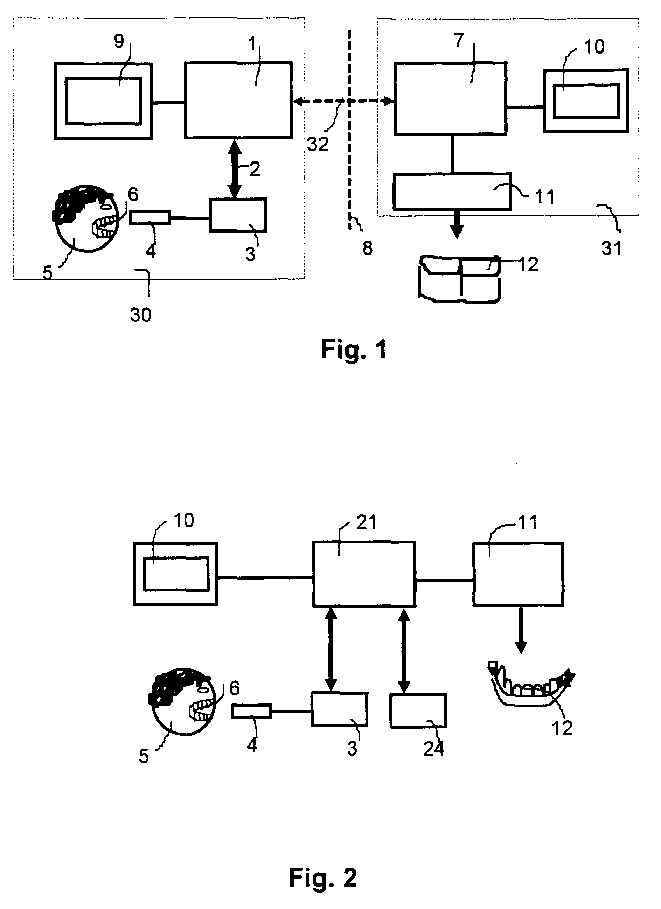

Fig. 1 zeigt ein erstes Ausführungsbeispiel einer Vorrichtung zur Herstellung von medizinischen Teilen. Die Vorrichtung besteht aus zwei räumlich getrennten Vorrichtungsteilen 30, 31. Der erste Vorrichtungsteil 30 dient der Datenerfassung und weist eine erste Datenerfasungsvorrichtung 1, einen Bildschirm 9 sowie eine Kameravorrichtung 3 mit einer daran angeschlossenen Mundkamera auf. Darüber hinaus ist in Fig. 1 im Bereich der ersten Vorrichtungsteils 30 noch ein Kopf 5 mit Zähnen 6 dargestellt. Der zweite Vorrichtungsteil 31 weist eine zweite Datenverarbeitungsvorrichtung 7 mit zugehörigem Bildschirm 7 sowie eine Herstellungsvorrichtung 11 auf. Die Herstellungsvorrichtung dient der Herstellung medizinischer Körperteile, beispielsweise der Herstellung eines Zahnersatzteiles 12. Mittels einer Trennlinie 8 ist bei dem in Fig. 1 dargestellten Ausführungsbeispiel angedeutet, daß der erste und zweite Herstellungsteil räumlich voneinander getrennt sind. Über eine als Pfeil dargestellte Verbindung 32 können Daten von der ersten Datenverarbeitungsvorrichtung 1 an die zweite Datenverarbeitungsvorrichtung 7 übermittelt werden.

Die in Fig. 1 dargestellte Prinzipdarstellung einer Herstellungssvorrichtung zur Herstellung von medizinischen Teilen hat die im folgenden beschriebene prinzipielle Arbeitsweise, die zu einer auf CAD und Rapid Prototyping basierende Herstellung von Zahnersatz und anderen individuell gefertigten medizinischen Teilen ermöglicht. Die Sensorvorrichtung 3, die bei dem in Fig. 1 dargestellten Ausführungsbeispiel als Mundkamera ausgebildet ist, dient als optischer Abnehmer der Dimensionen, z.B. der Zahngröße, der Zahnform, und/oder der Relationen der beiden Kiefer. Neben den Möglichkeiten einer optischen Meßdatenerfassung ist auch alternativ oder ergänzend eine mechanische Vermessung denkbar. Eine optische Vermessung ist jedoch vorzuziehen, da sie auch direkt in der Mundhöhle vorgenommen werden kann. Die Datenverarbeitungsvorrichtung 1, an die die Sensorvorrichtung 3 über die Verbindungsleitung 2 angeschlossen ist, wertet die von der Sensorvorrichtung 3 ermittelten Daten mit dem Ziel aus, einen virtuellen Prototypen des zu fertigenden medizinischen Teils 12 zu erzeugen. Neben der Erfassung analoger Meßdaten wie beispielsweise Größe und Lage des eines zu fertigenden Zahns ist die Datenverarbeitunsgvorrichtung auch in der Lage, weitere Daten, wie beispielsweise auch digitale Meßdaten über in Fig. 1 aus Gründen der Übersichtlichkeit nicht näher dargestellte Schnittstellen einzulesen, die mit anderen medizinischen bildgebenden Verfahren, z.B. Computertomographie und/oder digitalem Röntgen gewonnen wurden. Insbesondere bei einer Anwendung im zahnmedizinischen Bereich ist neben einer Vermessung der Zahngeometrie am Patienten selbst auch die Erfassung der Daten an einem Gipsmodell möglich, welches auf einem Abdruck des Patienten basiert.

Die so gewonnen Basisdaten für das zu fertigende medizinische Teil 12 werden von der ersten Datenverarbeitungssvorrichtung 1 über die Datenverbindung 32 an die Datenverarbeitungsvorrichtung 7, den Herstellungsrechner weitertransferiert. Dieser Datentransfer kann in beliebiger Weise über eine Datenleitung und/oder auch in Form eines in sonstiger Wiese transportierten Datenträgers erfolgen. Die Rapid Prototyping Einheit 11 formt, aus den von dem Rechner 7 gelieferten Daten das herzustellende medizinische Teil 12. Hierfür haben sich eine Reihe von unterschiedlichen Verfahren als geeignet erwiesen. So kann das herzustellende medizinische Teil aus einem pulverförmigem Material, aus einem oder mehreren Metallen oder Keramik, auch schichtweise aufgebaut und dann gesintert werden. Dabei kommt es zu einer Einsparung der ansonsten erforderlichen Arbeitsschritte eines Einbettens des zu modellierten Teils, eines Gießens und eines anschließenden Aufbereiten des herzustellenden Teils 12.

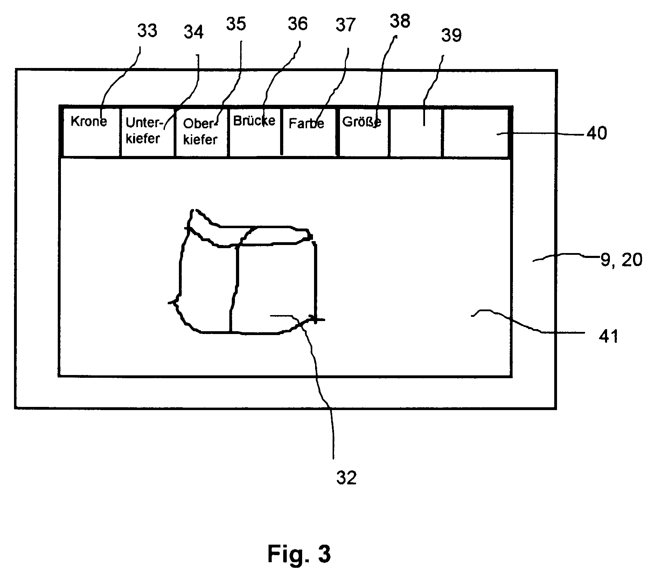

Wesentlicher Bestandteil der in Fig. 1 prinzipiell dargestellten Vorrichtung sind die Datenverarbeitungsvorrichtung 1, 7, die aus den ermittelten Meßdaten und/oder Bilddaten 3D-Modelle generiert, die die Grundlage für die computerunterstützte Modellation sind. Durch eine Symbolbibliothek, die im Zusammenhang mit Fig. 3 noch erläutert wird, kann ein virtuelles, d.h. in der Datenverarbeitungssvorrichtung 1 künstlich erzeugtes Abbild des herzustellenden Teils 12 weitgehend vereinfacht werden. Die Symbolbibliothek ist modular aufgebaut und arbeitet vorteilhafter Weise auch unabhängig von der oben aufgeführten Hardware. Hierdurch können damit Modellationen auch dezentral, evtl. im Krankenhaus oder in der Praxis durch den behandelnden Arzt vorgenommen werden. Dies ist bei dem in Fig. 1 dargestellten Ausführungsbeispiel durch die Trennlinie 8 symbolisiert.

Der prinzipielle Ablauf bei der Herstellung eines medizinischen Teils, beispielsweise von Zahnersatz ist folgender: Zunächst erfolgt eine Vermessung des herzustellenden Teils beispielsweise auf optischem Weg über eine Kamera. Dabei werden Aufnahmen in drei Ebenen vorgenommen und dann verrechnet. Zusätzlich und/oder alternativ können auch andere bildgebende Verfahren und andere bildgebende Geräte zur Datenerfassung verwendet werden, beispielsweise Computertoimograph, digitales Röntgen oder Magnetresonanztomographie. Das System ermittelt aus der Form der Zähne d.h. aus den 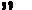 Benutzungsspuren", Schliffflächen an Höckerauf- und abgängen u. ä., die Kiefergelenkbewegung und errechnet hieraus die notwendige Okklusion. Das bedeutet im Falle von Zahnersatz, daß z.B. auch eine Hebung des Bisses möglich ist, da nicht primär die Okklusion als Bezug genommen wird, sondern vielmehr das Kiefergelenk. In Bezug auf das Herstellungsverfahren besteht weiterhin folgende Besonderheit: Das Trähermaterial zur Herstellung des medizinischen Teils wird gleichzeitig mit dem Metall bzw. der Keramik aus einer separaten Materialkartusche schichtweise der vorgegebenen Form entsprechend, aufgetragen. Die Versorgung wird also gleichzeitig von unten nach oben oder umgekehrt aufgebaut. Dieses Verfahren ermöglicht somit zusammen mit der Erfassung der Gaumenform bzw. der Form des tragenden Unterkieferbogens auch die Herstellung von Apparaturen, die große Teile des Kiefers betreffen. Auf diese Weise ist es möglich, nicht nur Keramikkronen, -brücken, und -inlays herzustellen, sondern alle Arten insbesondere von zahnmedizinischen Arbeiten, die entweder aus Metall oder Keramik hergestellt werden. Selbst die Herstellung von mechanischen Verbindungselementen zwischen festsitzendem und herausnehmbaren Zahnersatz, wie Geschiebe oder Anker, ist so möglich. Insbesondere läßt sich mit Hilfe des Systems auch ein neuer herausnehmbarer Zahnersatz, der an einen vorhandenen älteren festsitzenden angegliedert werden soll, auf einfache Weise herstellen. Dabei können sämtliche sinterfähigen Materialien zum Einsatz gelangen.

Fig. 2 zeigt ein weiteres Ausführungsbeispiel einer Vorrichtung zur Herstellung von medizinischen Teilen mit gemeinsamer Datenverarbeitungsvorrichtung 21 der Sensorvorrichtungen 3, 24 und der Herstellungsvorrichtung 11. Die Datenerfasungsvorrichtung 21 ist mit einem Bildschirm 10 und der Herstellungseinrichtung 11 gekoppelt. Über Schnittstellen 22,23 besteht darüber hinaus eine Anbindung zu den Sensorvorrichtungen 3, 24, die bei dem in Fig. 2 dargestellten Ausführungsbeispiel aus einer Kameravorrichtung 3 mit Mundkamera 4 sowie einer Röntgenanlage 24 verbindbar sind. Die in Fig. 2 dargestellte Anlage dient der gleichzeitigen Datenerfassung eines herzustellenden Objekts 6 eines Patienten 5 sowie der Herstellung des Zahnersatzes 12 als Ersatz für das Objekt 6.

Die Funktionsweise zur Herstellung des Zahnersatzes entspricht im wesentlichen der des in Fig. 1 dargestellten Ausführungsbeispiel. Deshalb wir d zur Vermeidung von Wiederholungen auf die Ausführungen zu Fig. 1 verwiesen. In Ergänzung zu einer Datenerfassung lediglich mit Hilfe der Kameravorrichtung 3 dient die in Fig. 2 dargestellte Röntgenvorrichtung 24 als weitere Datenquelle. Die so ermittelten Geometriedaten des herzustellenden Zahnersatzes 12 werden separat und/oder in Kombination in der Datenverarbeitungsvorrichtung verarbeitet. Das Ergebnis dieser Datenauswertung bildet das Eingangssignal für die Herstellungsvorrichtung 11. Fakultativ ist auch die Erstellung einer 3D-Grafik des herzustellenden Zahnersatzes auf dem Bildschirm 10 möglich, wobei über eine CAD-Umgebung der Datenverarbeitungsvorrichtung noch eine gezielte Anpassung des 3D-Abbildes des Zahnersatzes 12 in Bezug auf Geometrie, Material, Farbe etc. möglich ist.

Fig. 3 zeigt einen Bildschirm 9, 20, wie er zum Beispiel im Zusammenhang mit den in den Fig. 1 und 2 dargestellten Ausführungsbeispielen zum Einsatz kommt. Der Bildschirm 9, 20 ist in einen Hauptbildschirmbereich 41 und in Bildschirmbereiche 33.. 38 aufgeteilt. Der Hauptbildschirmbereich 41 dient der Darstellung eines herzustellenden Zahnteiles 32, während in den Teilbildschirmbereichen 33.. 36 die Auswahl vorgebbarer Modelle einer Symbolbibliothek auswählbar sind. Die Bildschirmbereiche 37, 38, 39 ermöglichen die Auswahl bezüglich Farbe, Größe und Material.

Die Bibliothek umfaßt vorteilhafter Weise nicht nur lediglich die herzustellenden medizinischen Teile, beispielsweise unterschiedliche Zähne etc., sondern auch die Art der herzustellenden Arbeit sowie zu verwendende 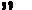 Fertigelemente" wie Anker und/oder Geschiebe. Des weiteren sind auch alle Zähne zusätzlich mit Ihrer Funktion als Halte- und Verbindungselement zum herausnehmbaren Anteil berücksichtigt. So läßt sich der herzustellende Zahnersatz leich aus der Symbolbibliothek erstellen, indem die Elemente einfach aneinandergereiht und an das virtuelle, im Rechner vorliegende Modell des Patienten angeglichen werden. Auch kann die Bibliothek für die Kieferchirurgie relevante Arbeiten wie Schienen etc. beinhalten. Auch diese lassen sich mit diesem Verfahren herstellen und können so entsprechend der Fraktur und den zu verbindenden Frakturteilen gefertigt werden.

Zentrales Element und Schnittstelle zwischen Mensch und Maschine ist die in der Datenverarbeitunsgvorrichtung (vgl. Fig. 1, Fig. 2) implementierte Software. Diese Software ist so aufgebaut, daß es mit Hilfe der Elemente der Symbolbibliothek wie beispielsweise Krone, Brücke, Inlay etc. das gewünschte Element auszuwählen und auf virtuell als 3-D-Bilddarstellung aus dem entsprechenden Zahn zu plazieren. Die Programme der Datenverarbeitungsseinrichtung sind derart ausgebildet, daß das herzustellende und bildlich bereits dargestellte Objekt auf eine passende Größe gebracht wird. Diese Anpassung erfolgt in der Weise, daß ein Randschluß entsprechend den vermessenen Stumpfdaten, unter Berücksichtigung von Zementspaltbreite und Materialmindeststärke ermittelt wird. Die Software muß weiterhin in der Lage sein Ober- und Unterkiefer in Relation zueinander zu setzen, um die Auswirkungen der Kiefergelenkbewegung für die in der Datenverarbeitunsgvorrichtung virtuell erzeugte Aufstellung/Modellation zu simulieren. Auf diese Weise können einzelne Gleithinternisse vor der Fertigung aufgespürt und beseitigt werde. Weiter ist es über die Kieferrelation möglich, die angestrebte Höhe, bzw. die Verzahnung von Ober- und Unterkiefer der modellierten Zähne festzulegen. Durch integrierte Imaging-Befehle wie Kippen, Drehen, Stauchen, Dehnen können die Zahnformen und Stellungen vom Zahntechniker individueller gestaltet werden. Weiterhin besitzt die spezielle Software der Datenverarbeitunsgvorrichtung die Fähigkeit Keramiken entsprechend den normalen Zahnfarbenringen zu schichten, um sie so sintern zu können.

Mit Hilfe der Erfindung wird es somit ermöglicht, eine mit geringsten Toleranzen behaftete medizinische Arbeit, insbesondere eine zahn-, medizin-technische Arbeit weitestgehend maschinell zu fertigen. Hierdurch läßt sich eine Zeiteinsparung für den Zahnarzt bzw. Patient erzielen und durch die gleichmäßige Verarbeitung des Materials eine hohe Paßgenauigkeit erzielen. Bisher erforderliche Schritte, wie Löten, Kleben, etc. fallen weg. Insgesamt lassen sich die herzustellenden Teile individueller gestalten und können auch aus demselben Material hergestellt werden. Dies erhöht die biologisch-allergische Sicherheit für den Patienten, da nicht biokompatible Werkstoffe wie Lote wegfallen.

Zusammenfassend betrifft die Erfindung somit ein Verfahren und eine Vorrichtung zur Herstellung von medizinischen Teilen, insbesondere von Zahnersatz. Die Vorrichtung besteht aus einer Vermessungsvorrichtung zur Erfassung der Dimensionen, z.B. Zahngröße, Form etc., aus einem Rechner, der die von der Vermessungsvorrichtung erfaßten Daten auswertet, und aus einer sogenannten Rapid Prototyping Machine, die aus den vom Rechner generierten Daten ein medizinisches Teil, beispielsweise eine Zahnkrone erzeugt. Hierdurch entfällt eine umständliche und für den Patienten lästige mechanische Abnahme eines Abdrucks für eine Negativform.

## Patentansprüche

1. Vorrichtung zur Herstellung von medizinischen Teilen (12) als Ersatz für Körperteile (6), insbesondere von Zahnersatz, mit einer Sensorvorrichtung (1, 2, 3, 4, 9) zur Erfassung der Dimensionen eines herzustellenden medizinischen Teils (6), mit einer Datenverarbeitungsvorrichtung (1, 21) zur Auswertung der mittels der Sensorvorrichtung (1, 2, 3, 4, 9) erfaßten Daten, und mit einer Herstellungsvorrichtung (7, 11) zur Herstellung des medizinischen Teils (6) aus den mittels der Datenverarbeitungsvorrichtung (1, 21) ausgewerteten Daten.

2. Vorrichtung nach Anspruch 1,
**dadurch gekennzeichnet**,
daß die Sensorvorrichtung (1, 2, 3, 4, 9) eine Kamera (3, 4), eine Röntgenvorrichtung (24), eine Ultraschallaufnahmevorrichtung und/oder eine Comptertomograhphieaufnahmevorrichtung aufweist, die zur optischen Vermessung der Dimensionen des zu ersetzenden Körperteils (6) vorgesehen ist.

3. Vorrichtung nach einem der Ansprüche 1 oder 2,
**dadurch gekennzeichnet**,
daß die Sensorvorrichtung (1, 2, 3, 4, 9) eine mechanische Vermessungsvorrichtung aufweist.

4. Vorrichtung nach einem der Ansprüche 1 bis 3,
**dadurch gekennzeichnet**,
daß die Vorrichtung zur Herstellung von Zahnersatz vorgesehen ist.

5. Vorrichtung nach einem der Ansprüche 1 bis 4,
**dadurch gekennzeichnet**,
daß die Datenverarbeitungsvorrichtung (1, 7, 21) eine Symbolbibliothek von medizinischen Teilen enthält, die aus den durch die Sensorvorrichtung (1, 2, 3, 4, 9) erfaßten Daten 3-D-Modelle vorgebbarer Körperteile (6) generiert.

6. Vorrichtung nach einem der Ansprüche 1 bis 5,
**dadurch gekennzeichnet**,
daß für Anwendungen im zahnmedizinischen Bereich die Vorrichtung Mittel aufweist, die die über die Sensorvorrichtung erfaßten Daten der Kiefer in Relation zu dem herzustellenden Teil setzt, wobei eine Mittelwertartikulation und/oder eine individuelle Artikulation vorgesehen ist.

7. Vorrichtung nach einem der Ansprüche 1 bis 6,
**dadurch gekennzeichnet**,
daß die Vorrichtung Mittel zur Simulation von Körperbewegungen anhand der aus den 3-D-Modellen erstellten virtuellen Körperteile aufweist.

8. Vorrichtung nach einem der Ansprüche 1 bis 7,
**dadurch gekennzeichnet**,
daß bei zahnmedizinischen Anwendungen Ober- und Unterkiefer in Relation zueinander gesetzt werden, um die daraus resultierenden Auswirkungen von Kieferbewegungen zu simulieren.

9. Verfahren zur Herstellung von medizinischen Teilen (12) als Ersatz für Körperteile (6), insbesondere von Zahnersatz, bei dem mittels einer Sensorvorrichtung (1, 2, 3, 4, 9) die Dimensionen eines herzustellenden medizinischen Teils (6) erfaßt werden, bei dem mittels einer Datenverarbeitungsvorrichtung (1, 21) die von der Sensorvorrichtung (1, 2, 3, 4, 9) erfaßten Daten ausgewertet werden, und bei der das medizinische Teil (6) aus den mittels der Datenverarbeitungsvorrichtung (1, 21) ausgewerteten Daten hergestellt wird.

10. Verfahren nach Anspruch 9,
**dadurch gekennzeichnet**,
daß als Sensorvorrichtung (1, 2, 3, 4, 9) eine Kamera (3, 4), eine Röntgenvorrichtung (24), eine Ultraschallaufnahmevorrichtung und/oder eine Comptertomograhphieaufnahmevorrichtung vorgesehen ist und das zu ersetzende Körperteil (6) bezüglich seiner Dimensionen optisch vermessen wird.
